**Europäisches Patentamt**

**European Patent Office**

**Office européen des brevets**

(11) Veröffentlichungsnummer: **0 495 201 B1**

## (12) EUROPÄISCHE PATENTSCHRIFT

(45) Veröffentlichungstag der Patentschrift: **31.05.95**

(51) Int. Cl.⁶: **B60H 1/00**

(21) Anmeldenummer: **91121133.2**

(22) Anmeldetag: **10.12.91**

(54) **Luftmengen-Regelanordnung für Kraftfahrzeuge.**

(30) Priorität: **14.01.91 DE 4100817**

(43) Veröffentlichungstag der Anmeldung:
**22.07.92 Patentblatt 92/30**

(45) Bekanntmachung des Hinweises auf die
Patenterteilung:
**31.05.95 Patentblatt 95/22**

(84) Benannte Vertragsstaaten:
**DE ES FR GB IT**

(56) Entgegenhaltungen:
EP-A- 0 104 547
EP-A- 0 326 044
FR-A- 2 496 017
JP-A-57 105 579

(73) Patentinhaber: **Behr GmbH & Co.**
**Mauserstrasse 3**
**D-70469 Stuttgart (DE)**

(72) Erfinder: **Lochmahr, Karl, Dipl.-Ing. (FH)**
**Mohnweg 5**
**W-7143 Vaihingen/Enz. (DE)**
Erfinder: **Schnell, Erwin, Dipl.-Ing.**
**Talstrasse 24**
**W-7022 Leinfelden (DE)**

(74) Vertreter: **Dreiss, Hosenthien, Fuhlendorf &**
**Partner**
**Gerokstrasse 6**
**D-70188 Stuttgart (DE)**

## Beschreibung

Die vorliegende Erfindung bezieht sich auf eine Anordnung zum Regeln der dem Innenraum eines Fahrzeugs, vorzugsweise Kraftfahrzeugs zugeführten Luftmenge nach dem Oberbegriff des Anspruchs 1.

Bei einer bekannten Regelanordnung wird am Tachometer ein der Fahrgeschwindigkeit proportionales Signal abgegriffen, welches die Stellung einer Eingangsklappe im Luftführungskanal regelt. Damit ist es möglich, die Luftmenge in Abhängigkeit von der Fahrgeschwindigkeit einzustellen. Mit dieser Regelanordnung wird in das Widerstandsverhalten des Eingangsstranges eingegriffen, wobei es je nach Fahrgeschwindigkeit und Betriebspunkt des Gebläses zu einer ansaugseitigen Drosselung und den damit verbundenen Verlusten kommt (schlechter Gebläsewirkungsgrad). Außerdem berücksichtigt diese Regelanordnung nicht die sich im Fahrzeuginnenraum möglicherweise ergebenden Veränderungen hinsichtlich des Luftmengenbedarfs durch Öffnen oder Schließen von Fenstern, Schiebedach und dgl. Außerdem kann es bei bestimmten äußeren Bedingungen und je nach Anordnung der Eintrittsöffnung des Luftführungskanals am Fahrzeug zu einer unzulässig hohen Stromaufnahme des Gebläsemotors kommen, was möglicherweise zu einer Beschädigung der Wicklung, zumindest jedoch zu einem erhöhten Bürstenverschleiß am Motor führt. Da durch das Gebläse Luftmengen in einem Maße gefördert werden, wie sie in vielen Fällen nicht benötigt werden, hat dies auch eine nicht notwendig hohe Stromaufnahme des Gebläsemotors und damit eine kürzere Lebensdauer, sowie einen erhöhten Energieverbrauch zur Folge.

Bei einer Anordnung zum Regeln der dem Innenraum eines Fahrzeugs zugeführten Luftmenge der eingangs genannten Art, wie sie aus der EP-A-0 104 547 bekannt geworden ist, ist die Differenzdruck-Meßvorrichtung mit ihrer Eintritts- bzw. Austrittsöffnung vor bzw. unmittelbar hinter dem Wärmetauscher angeordnet. Sowohl die Ein- als auch die Austrittsöffnung der Differenzdruck-Meßvorrichtung führt in den Luftführungskanal, der über einen nicht absperrbaren Auslaß in den Fahrgastraum führt. Eine derartige Messung zwischen zwei voneinander entfernt liegenden Stellen innerhalb des Luftführungskanals kann jedoch ebenfalls nicht sich im Fahrzeuginnenraum ergebende Veränderungen des Luftmengenbedarfs erfassen.

Aufgabe der vorliegenden Erfindung ist es, eine Anordnung zum Regeln der dem Innenraum eines Fahrzeugs, vorzugsweise Kraftfahrzeugs zugeführten Luftmenge der eingangs genannten Art zu schaffen, mit der die dem Fahrzeuginnenraum zuzuführende Luftmenge unter Berücksichtigung von Störeinflüssen, wie Fahrzeuggeschwindigkeit, Fenster- und Schiebedachbetätigungen und dgl. in Abhängigkeit eines vorgegebenen Sollwertes angepasst werden kann.

Zur Lösung dieser Aufgabe sind bei einer Anordnung der genannten Art die im Anspruch 1 angegebenen Merkmale vorgesehen.

Durch die erfindungsgemäßen Maßnahmen ist es möglich, die dem Fahrzeuginnenraum zuzuführenden Luftmengen an die dort herrschenden Verhältnisse in voreingestellter Weise anzupassen. Wird bspw. der Differenzdruck dadurch erhöht, daß im Innenraum das Schiebedach oder ein Fenster geöffnet wird, so wird die Leistung des Gebläsemotors soweit herabgesetzt, bis sich der Differenzdruck wieder auf seinen vorgegebenen Sollwert einstellt und dadurch eine Anpassung der Gebläseleistung an die tatsächlich gewünschte Luftmenge möglich wird. Dies trägt zur Reduzierung der benötigten Energie bei.

Ein zweckmäßiger Meßort für den Differenzdruck im Falle eines mit einer Klimaanlage versehenen Fahrzeug ergibt sich durch die Merkmale des Anspruchs 2.

Zur Messung des Differenzdruckes wäre es bspw. möglich, im Luftführungskanal und im Fahrzeuginnenraum jeweils eine Druckmeßdose oder dgl. Drucksensor anzuordnen und aus den Messungen in geeigneter Weise die Differenz zu bilden. Eine zweckmäßige Ausgestaltung der Differenzdruckmessung ergibt sich jedoch aus den Merkmalen gemäß Anspruch 3. Dies bedingt eine Reduzierung sowohl des Bauaufwandes als auch des Montageaufwandes und führt darüberhinaus zu einer sehr feinfühligen Differenzdruckmessung.

Eine zweckmäßige Ausführungsform zur Leistungsregelung des Gebläsemotors ergibt sich durch die Merkmale des Anspruchs 4 oder die des Anspruchs 5.

Da die Regelung der Zuführung der Luftmenge in der Weise erfolgt, daß es möglich ist, daß bei einer bestimmten Fahrgeschwindigkeit der Differenzdruck-Sollwert auch bei stillstehendem Gebläse noch nicht erreicht werden kann, sind, um mit Sicherheit innerhalb der Regelmöglichkeiten der Luftmenge zu bleiben, die Merkmale gemäß Anspruch 6 vorgesehen. Dies bedeutet, daß der Gefahr einer Erhöhung des Differenzdruckes über den Sollwert hinaus bei stillstehendem oder nahezu stillstehendem Gebläse dadurch begegnet wird, daß die Absperrklappe in Richtung ihrer Schließstellung bewegt wird.

Gemäß den Merkmalen des Anspruchs 7 ist es bei der erfindungsgemäßen Regelanordnung auch möglich, eine oder mehrere der zum Fahrzeuginnenraum führenden Austrittsöffnungen des Luftführungskanals mit manuell verstellbaren Absperrklappen zu versehen. Gemäß den Merkmalen des Anspruchs 8 kann die dem Fahrzeug-Innenraum zugeführte Luftmenge einer manuellen Änderung der Luftverteilung angepaßt werden, indem die Gebläseleistung so verändert wird, daß der Sollwert der Druckdifferenz wieder erreicht wird. Dadurch lassen sich bspw. unangenehme Zugerscheinungen infolge einer Zunahme der Austrittsgeschwindigkeiten an den übrigen Luftaustritten vermeiden. Gemäß den Merkmalen des Anspruchs 9 ist es bei der erfindungsgemäßen Regelanordnung auch möglich, einen oder mehrere der zum Fahrzeug-Innenraum führenden Luftführungskanäle mit motorisch verstellbaren Absperrklappen zu versehen. Wird dabei gemäß Anspruch 10 vorgesehen, den Sollwert der zuzuführenden Luftmenge von der Luftverteilung im Fahrzeuginnenraum abhängig zu machen, so ist es von besonderem Vorteil, die Merkmale gemäß Anspruch 11 vorzusehen. Dies bedeutet bspw., daß dann, wenn die Klappenstellungskombination derart ist, daß nur die Entfrostungsabsperrklappe offen ist (und die beiden anderen geschlossen sind) der Sollwert für den Differenzdruck automatisch dahingehend verändert wird, daß eine maximale Scheibenenteisung möglich ist. Dies wird zweckmäßiger Weise gemäß den Merkmalen des Anspruchs 12 mit Hilfe derselben Regeleinheit vollzogen.

Ist in einem Kraftfahrzeug eine Klimaanlage eingebaut, so kann es auch zweckmäßig sein, die Merkmale gemäß Anspruch 13 zur Bestimmung des Sollwertes vorzusehen.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:

Figur 1     in schematischer Darstellung den Frontbereich eines Kraftfahrzeugs mit einer in mechanischen und elektrischen Bauteilen dargestellten Regelanordnung für die dem Fahrzeuginnenraum zuzuführende Luftmenge gemäß einem bevorzugten Ausführungsbeispiel vorliegender Erfindung,

Figur 2     in Form eines Diagramms die Abhängigkeit der Gebläsespannung von der Reglerstellgröße,

Figur 3     in Form eines Diagramms die Abhängigkeit der Stellung einer Absperrklappe am Einlaß des Luftführungskanals in Abhängigkeit von der Reglerstellgröße und

Figur 4     ein Flußdiagramm zur Darstellung der Luftmengenregelung.

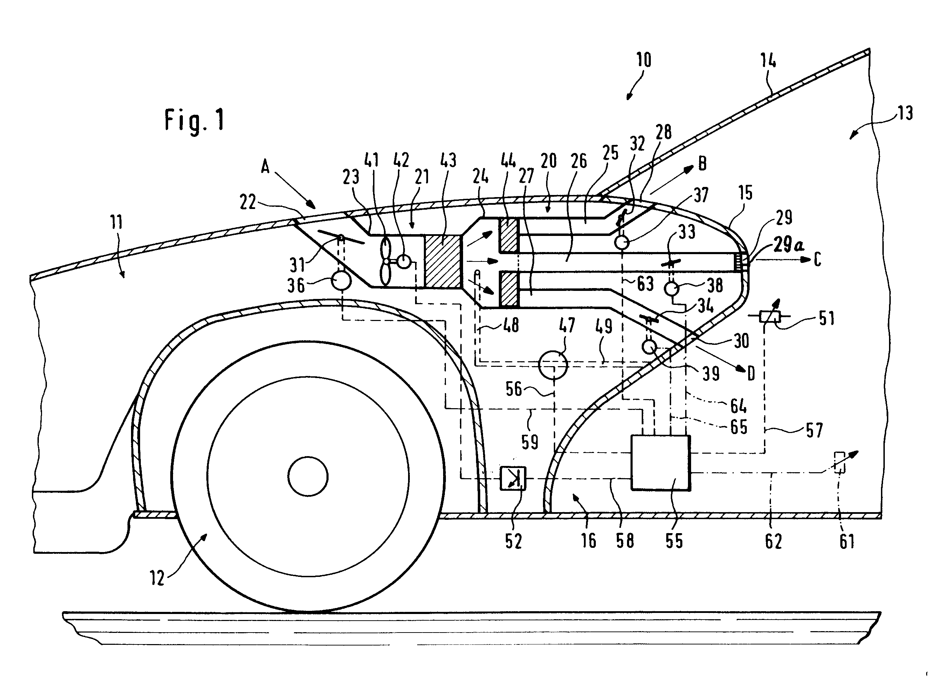

In Figur 1 ist in teilweise abgebrochener Seitenansicht ein Kraftfahrzeug in Form eines Personenwagens 10 dargestellt, aus welcher Darstellung in abgebrochener Weise der Motorraum 11, ein Vorderrad 12 und in abgebrochener Weise der Fahrzeuginnenraum 13 gezeigt sind. Der Innenraum 13 ist unter anderem von einer Frontscheibe 14 und einem sog. Armaturenbrett 15, unterhalb dessen der Fußraum angeordnet ist, begrenzt. In diesen Bereichen von Motorraum 11 und Innenraum 13 des Kraftfahrzeugs 10 ist beim Ausführungsbeispiel vorliegender Erfindung eine Luftmengen-Regelanordnung 20 angeordnet. Hierzu ist ein Luftführungskanal 21 vorgesehen, der mit einer Lufteintrittsöffnung 22 an einem bestimmten Bereich vor der Frontscheibe 14 und mit einem an einen Eingangsabschnitt 23 anschließender Luftverteilerabschnitt 24 versehen ist. An den Luftverteilerabschnitt 24 schließen sich drei hier sichtbare, zum Armaturenbrett 15 führende Luftleitkanäle 25,26 und 27 an, von denen der erste Luftleitkanal 25 eine Austrittsöffnung 28 im Bereich der Frontscheibe 14, der zweite Luftleitkanal 26 eine Austrittsöffnung 29 im Bereich des dem Innenraum 13 zugeordneten bauchigen Teils des Armaturenbretts 15 und der dritte Luftleitkanal 27 eine Austrittsöffnung 30 im Bereich des Fußraums 16 bzw. in einem zu diesem hingerichteten Bereich aufweist. Die Lufteintritts- und Luftaustrittsöffnungen des Luftführungskanals 21 sind durch die Pfeile A bzw. B, C und D gekennzeichnet. Bspw. die Luftaustrittsöffnung 29 ist mit einer manuell verstellbaren Abschlußklappe 29a versehen. Es versteht sich, daß pro Innenraumseite bspw. drei Austrittsöffnungen 28 bis 30 vorgesehen sind.

Sowohl die Lufteintrittsöffnung 22 als auch die Luftleitkanäle 25, 26 und 27 sind mit Absperrklappen 31 bzw. 32, 33, 34 versehen, die mit Hilfe eines Elektromotors, vorzugsweise eines Schrittschaltmotors 36 bzw. 37, 38, 39 verstellbar sind.

Im Eingangsabschnitt 23 des Luftführungskanals 21 ist ein von einem Elektromotor 42 angetriebenes Gebläse 41, bspw. ein Axialgebläse angeordnet, dessen Druckseite dem Verteilerabschnitt 24 des Luftführungskanals 21 zugewandt ist. Zwischen dem Gebläse 41 und dem Verteilerabschnitt 24 ist ein Verdampfer 43 insbesondere dann vorgesehen, wenn das Kraftfahrzeug 10 mit einer Klimaanlage ausgerüstet ist. Im ersten und dritten Luftleitkanal 25 bzw. 27 ist ein Heizelement 44 zum Erwärmen der dem ggf. Entfrosten der Frontscheibe 14 dienenden Luftstrahl bzw. zum ggf. Erwärmen des in den Fußraum 16 gerichteten Luftstrahls vorgesehen.

Die Regelanordnung 20 besitzt ferner einen Luftstromsensor 47, dessen zugangsseitige Schlauchleitung 48 mit dem Innenraum des Verteilerabschnitts 24 verbunden ist und dessen ausgangsseitige Schlauchleitung 49 in den Fahrzeuginnenraum 13, bspw. unterhalb des Armaturenbretts 15 mündet. Ein derartiger Luftstromsensor ist in der Lage, die Strömungsgeschwindigkeit vom Verteilerabschnitt 24 des Luftführungskanals 21 zum Fahrzeuginnenraum 13, die ein Maß für den Differenzdruck Δp zwischen dem im Verteilerabschnitt 24 an der Druckseite des Gebläses 41 herrschenden Druck und dem Druck im Fahrzeuginnenraum 13 ist, zu messen. Dieser Luftstromsensor 47 wird dahingehend geeicht, daß eine Messung des Differenzdruckes Δp möglich ist, wobei bspw. dynamische Differenzdrücke von -5 bis +5 mbar bei einer Ausgangsspannung von 0 bis 25 mV meßbar sind. Ein derartiger Luftstromsensor ist bspw. in der Zeitschrift "Elektronik", Heft 12 vom 10.6.1988 beschrieben. Für eine genaue Messung ist es zweckmäßig, die Schlauchleitungen 48, 49 mit gleichem Querschnitt zu versehen und möglichst etwa gleich lang auszuführen.

Es versteht sich, daß der Differenzdruck Δp auch durch zwei separate Druckmeßsensoren, bspw. in Form von Druckmeßdosen, deren Meßwerte elektrisch verarbeitet werden, erfaßt werden kann.

Die Regelanordnung 20 besitzt außerdem eine zentrale, einen Mikroprozessor beinhaltende Regeleinheit 55, die über eine elektrische Leitung 56, 57 bzw. mit der elektrischen Ausgangsklemme des Luftstromsensors 47, mit einem Luftmengen-Sollwertsteller 51 und über eine Leistungstransistorschaltung 52 mit dem Gebläsemotor 42 verbunden ist. Der Gebläsemotor ist damit einer getakteten oder linearen Spannungs- oder Stromregelung unterworfen. Es ist auch möglich, einen elektronisch kommutierbaren Gebläsemotor 42 vorzusehen. Die Regeleinheit 55 ist außerdem über eine elektrische Leitung 59 mit dem Motor 36 der Absperrklappe 31 in dem Eingangsabschnitt 23 des Luftführungskanals 21 verbunden.

Mit dem Sollwertsteller 51, der bspw. am Armaturenbrett 15 vom Fahrzeuginnenraum 13 her zugängig ist und bspw. von Hand betätigt werden kann, wählt die Bedienungsperson die ihr genehme, dem Innenraum 13 zuzuführende Luftmenge. Der Istwert der dem Innenraum 13 zugeführten Luftmenge wird durch den Luftstromsensor 47 erfasst, da der Differenzdruck Δp zwischen der betreffenden Stelle im Luftführungskanal 21 und dem Fahrzeuginnenraum 13 ein Maß für die in den Innenraum 13 geförderte Luftmenge ist. Die in den Innenraum 13 zu fördernde Luftmenge ist dabei abhängig einerseits von der Fahrzeuggeschwindigkeit (welche Abhängigkeit je nach Fahrzeugtyp und Anordnung der Lufteintrittsöffnung 22 mehr oder weniger groß sein kann) und von den im Fahrzeuginnenraum 13 vorgegebenen Verhältnissen, nämlich ob bspw. eines oder mehrere Fenster und/oder das Schiebedach geöffnet bzw. geschlossen sind bzw. ist.

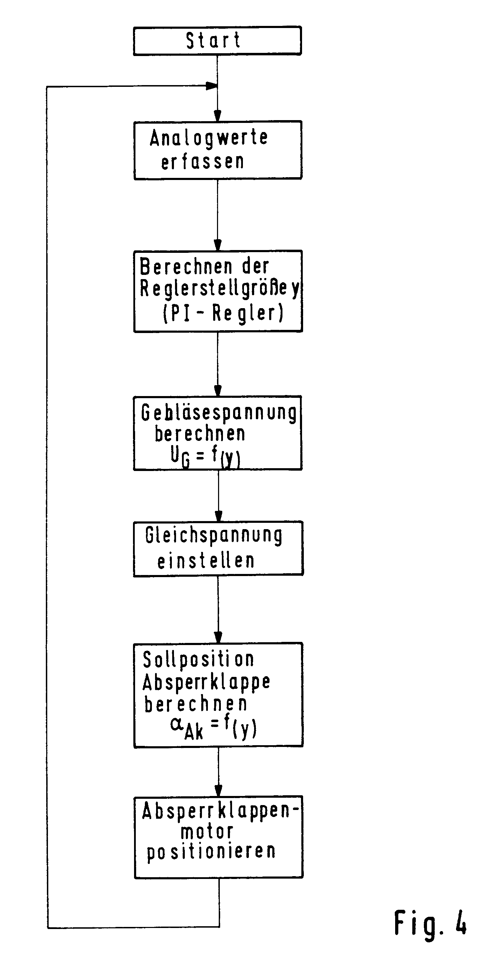

Anhand des Flußdiagramms nach Figur 4 sei die Funktionsweise der Regelanordnung 20 beschrieben. Mit Beginn ("Start") der Luftmengenregelung werden zunächst in analoger Weise der am Sollwertsteller 51 eingestellte Luftmengen-Sollwert und der herrschende Differenzdruck Δp vom Luftstromsensor 47 erfasst ("Analogwerte erfassen"). Aus der Differenz zwischen dem eingestellten Luftmengen-Sollwert und dem Differenzdruck-Istwert, der ein Maß für den Luftmengen-Istwert ist, wird die Regelabweichung Xw gebildet, aus welcher unter Zugrundelegung eines PI-Reglers eine Stellgröße y in der Regeleinheit 55 nach folgender Gleichung berechnet wird:

$$y = kp \cdot Xw + 1/T \int Xw \, dt,$$

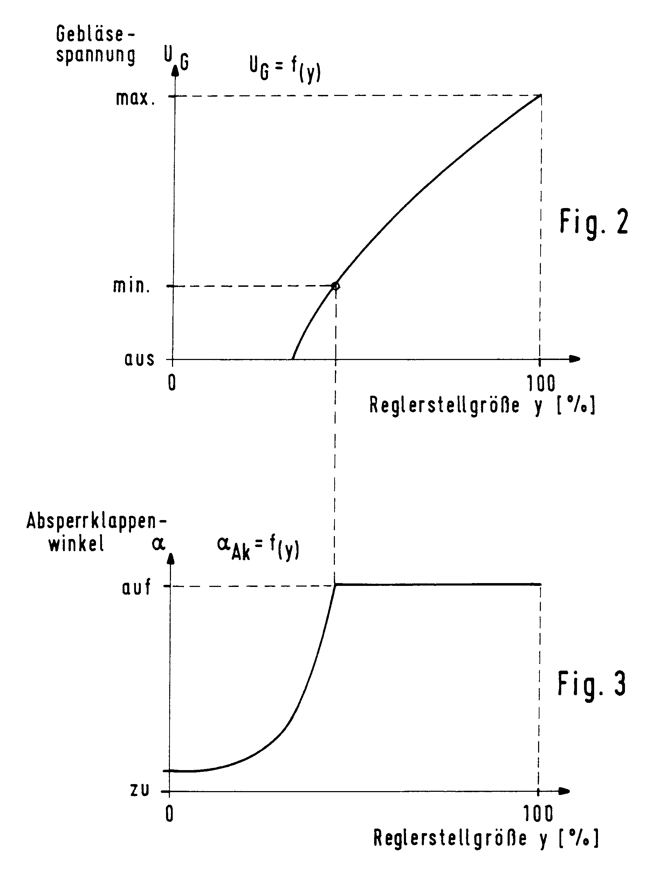

wobei kp eine Reglerkonstante ist ("Berechnen der Stellgröße y"). Auf der Grundlage des in Figur 2 dargestellten Diagrammes UG = f(y) wird die Motorspannung 42 für das Gebläse 41 bestimmt. Mit anderen Worten, ist die Regelabweichung Xw (Δp ist - Δp soll) groß, ist auch die Reglerstellgröße y groß, was bedeutet, daß die Spannung am Gebläsemotor 42 zur Erhöhung der zuzuführenden Luftmenge erhöht wird, was durch eine daraus folgende erhöhte Drehzahl des Gebläses 41 erreicht wird ("Gebläsespannung berechnen" und "Gebläsespannung einstellen"). Ist die Regelabweichung Xw klein, so kann sich aufgrund der kleinen Reglerstellgröße y eine derart kleine Gebläsespannung UG einstellen, von bspw. 2 bis 3 Volt, bei der der Gebläsemotor 42 nicht mehr umläuft. Hat sich dieser Betriebszustand eingestellt, so bedeutet dies, daß der Soll-Differenzdruck bspw. allein durch die hohe Fahrtgeschwindigkeit bzw. die damit zugeführte Luftmenge erreichbar ist. Je nachdem, ob die Reglerstellgröße y von größeren oder kleineren Werten in diesen Bereich gelangt, ergeben sich für den Motorantrieb unterschiedliche minimale Spannungswerte (Spannungshysterese).

Es ist nun denkbar, daß ein relativ hoch eingestellter Soll-Differenzdruck mit diesem Betriebszustand (nicht rotierendes Gebläse) noch nicht erreicht ist oder daß sich bei erreichtem Soll-Differenzdruck nun der Ist-Differenzdruck durch eine Veränderung der Fahrgeschwindigkeit verändert. Dies bedeutet, daß auf diese Weise eine Verringerung des Differenzdurckes vom Ist- auf den Sollwert nicht mehr möglich ist. Gemäß dem Funktionsdiagramm der Figur 3 wird in diesem Regelbereich der Stellwinkel der Absperrklappe 31 in der Lufteintrittsöffnung 22 in Abhängigkeit von der Reglerstellgröße y verstellt ("Sollposition Absperrklappe berechnen" und "Absperrklappenmotor positionieren"). Dadurch kann der Soll-Differenzdruck auch bei stehendem Gebläse eingestellt werden. Die einzelnen Schritte wiederholen sich gemäß dem dargestellten Flußdiagramm bei einer Reglerabweichung, bspw. dann, wenn ein Fenster und/oder ein Schiebedach geöffnet wird, so daß der Druck im Innenraum 13 und damit der Luftmengenbedarf abnimmt.

Es versteht sich, daß der Luftmengen-Sollwertsteller 51 auch in automatischer Weise, bspw. bei einer Klimaanlage aufgrund der benötigten Wärmemenge verstellt werden kann.

Gemäß einer in Figur 1 ebenfalls (strichpunktiert) eingezeichneten Variante der Regelanordnung 20 ist ein zweiter Sollwertsteller 61 für die Luftverteilung im Fahrzeuginnenraum 13 vorgesehen. Dieser und die Stellmotoren 37 bis 39 in den Luftleitkanälen 25 bis 27 sind über elektrische Leitungen 62 bis 65 mit der Regeleinheit 55 elektrisch verbunden. Durch Einstellen bspw. von Hand des (zweiten) Luftverteilungs-Sollwertstellers 61 wird entsprechend der gewünschten Luftverteilung im Fahrzeuginnenraum 13 eine bestimmte Stellungskombination der ausgangsseitigen Absperrklappen 32 bis 34 ausgewählt. Über diese Absperrklappen-Stellungskombination wird die in den Innenraum 13 zu fördernde Luftmenge bestimmt. Wird bspw. die Absperrklappen-Stellungskombination so gewählt, daß die Absperrklappe 32 zum Entfrosten der Frontscheibe 14 vollständig geöffnet und die beiden anderen Absperrklappen 33 und 34 vollständig geschlossen sind, so wird damit eine maximale Verstellung des ersten Luftmengen-Sollwertstellers 51 in den Endbereich zur maximalen Luftmengenzuführung programmgemäß über die Regeleinheit 55 erreicht, die ihrerseits aufgrund der dann hohen Regelabweichung dem Gebläsemotor 42 maximale Soll-Spannung zuführt.

**Patentansprüche**

1.  Anordnung (20) zum Regeln der dem Innenraum (13) eines Fahrzeugs, vorzugsweise Kraftfahrzeugs (10) zugeführten Luftmenge, mit einem in einem Luftführungskanal (21) angeordneten Gebläse (41), dessen Antriebsmotor (42) von einer Regeleinheit (55) angesteuert ist, mit einer Differenzdruck-Meßvorrichtung (47), deren Lufteintrittsöffnung zum Messen des hinter dem Gebläse (41) herrschenden Eingangsdrucks mit dem Luftführungskanal (21) verbunden ist, und bei der die am Gebläsemotor (42) angelegte Spannung vom in der Regeleinheit (55) durchgeführten Vergleich des gemessenen und ein Maß für die geförderte Luftmenge darstellenden Differenzdrucks mit einer einstellbar vorgegebenen Soll-Luftmenge abhängig ist, **dadurch gekennzeichnet,** daß in einem Ausgangsbereich des Luftführungskanals (21) mindestens eine Absperrklappe (29a;32-34) vorgesehen ist und daß die Luftaustrittsöffnung der Differendruck-Meßvorrichtung (47) zum Messen des im Fahrzeug-Innenraum (13) herrschenden Druckes mit dem Fahrzeug-Innenraum (13) verbunden ist.

2.  Anordnung nach Anspruch 1, dadurch gekennzeichnet, daß der Eingangsdruck im Luftführungskanal (21) in Strömungsrichtung hinter einem Verdampfer (43) einer Klimaanlage gemessen ist.

3.  Anordnung nach Anspruch 1 oder 2, dadurch gekennzeichnet, daß zum Messen des Differenzdruckes ein Luftstromsensor (47) vorgesehen ist, dessen Leitungsverbindungen (48,49) zum Luftführungskanal (21) einerseits und zum Fahrzeug-Innenraum (13) andererseits etwa gleiche Länge und etwa gleichen Querschnitt aufweisen.

4.  Anordnung nach mindestens einem der Ansprüche 1 bis 3, dadurch gekennzeichnet, daß zwischen Regeleinheit (55) und Gebläsemotor (42) eine Leistungstransistoreinheit (52) zur getakteten oder linearen Spannungs- oder Stromregelung geschaltet ist.

5.  Anordnung nach mindestens einem der vorhergehenden Ansprüche, dadurch gekennzeichnet, daß ein elektronisch kommutierter Gebläsemotor (42) vorgesehen ist.

6.  Anordnung nach mindestens einem der vorhergehenden Ansprüche, dadurch gekennzeichnet, daß im Lufteintrittsstutzen (23) des Luftführungskanals (21) eine motorisch verstellbare Absperrklappe (31) vorgesehen ist, deren mit der Regeleinheit (55) verbundener Antriebsmotor (36) dann ansteuerbar ist, wenn der Gebläsemotor (42) mit einer vorgegebenen minimalen Spannung oder darunter versorgt ist.

7.  Anordnung nach mindestens einem der vorhergehenden Ansprüche, dadurch gekennzeichnet, daß zumindest eine der Austrittsöffnungen (28-30) des Luftführungskanals (21) im Fahrzeug-Innenraum (13) mit einer manuell verstellbaren Absperrklappe (29a) versehen ist.

8.  Anordnung nach Anspruch 7, dadurch gekennzeichnet, daß der Differenzdruck durch manuelle Verstellung der Absperrklappe(n) (29a) auf der (den) Austrittsöffnung(en) (28-30) im Fahrzeug-Innenraum veränderbar ist.

9.  Anordnung nach mindestens einem der vorhergehenden Ansprüche, dadurch gekennzeichnet, daß die Luftleitkanäle (25-27) mit motorisch verstellbaren Absperrklappen (32-34) versehen sind.

10. Anordnung nach mindestens einem der vorhergehenden Ansprüche, dadurch gekennzeichnet, daß der Sollwert der zuzuführenden Luftmenge in Abhängigkeit von der gewählten Luftverteilung für den Fahrzeug-Innenraum (13) vorgegeben ist.

11. Anordnung nach einem der Ansprüche 7 bis 10, dadurch gekennzeichnet, daß der Sollwert der zuzuführenden Luftmenge durch bestimmte Stellungskombinationen der ausgangsseitigen Absperrklappen (32-34) an der oder den Austrittsöffnungen bestimmt ist.

12. Anordnung nach Anspruch 11, dadurch gekennzeichnet, daß die Stellung der ausgangsseitigen Absperrklappe(n) (32-34) von der Regeleinheit (55) erfasst und zur Vorgabe eines Luftmengen-Sollwertes verarbeitbar ist.

13. Anordnung nach mindestens einem der Ansprüche 1 bis 9, dadurch gekennzeichnet, daß beim Betrieb einer Heizungs- oder Klimaanlage der Sollwert der zuzuführenden Luftmenge in Abhängigkeit von der benötigten Wärme- bzw. Kälteleistung gewählt ist.

**Claims**

1. An arrangement (20) for regulating the amount of air fed to the interior (13) of a vehicle, preferably a motor vehicle, comprising a fan (41) which is arranged in an air circulation duct (21) and whose drive motor (42) is controlled by a regulating unit (55), and a differential pressure measuring device (47) whose air inlet opening is connected to the air circulation duct (21) for measurement of the intake pressure prevailing behind the fan (41), and in which the voltage applied to the fan motor (42) is dependent on the comparison effected in the regulating unit (55) of the measured differential pressure which represents a measurement in respect of the amount of air delivered, with an adjustably predetermined reference amount of air, characterised in that at least one shut-off flap (29a; 32-34) is provided in a discharge region of the air circulation duct (21) and that the air outlet opening of the differential pressure measuring device (47) is connected to the vehicle interior (13) for measurement of the pressure obtaining in the vehicle interior (13).

2. An arrangement according to claim 1 characterized in that the intake pressure in the air circulation duct (21) is measured in the flow direction downstream of an evaporator (43) of an air conditioning installation.

3. An arrangement according to claim 1 or claim 2 characterised in that for measurement of the differential pressure there is provided an air flow sensor (47) whose line connections (48, 49) to the air circulation duct (21) on the one hand and to the vehicle interior (13) on the other hand are of approximately equal length and approximately equal cross-section.

4. An arrangement according to at least one of claims 1 to 3 characterised in that a power transistor unit (52) is connected between the regulating unit (55) and the fan motor (42) for cyclic or linear voltage or current regulation.

5. An arrangement according to at least one of the preceding claims characterised in that there is provided an electronically switched fan motor (42).

6. An arrangement according to at least one of the preceding claims characterised in that provided in the air inlet connection (23) of the air circulation duct (21) is a motor-displaceable shut-off flap (31) whose drive motor (36) which is connected to the regulating unit (55) can be actuated when the fan motor (42) is supplied with a predetermined minimum voltage or less than same.

7. An arrangement according to at least one of the preceding claims characterised in that at least one of the outlet openings (28-30) of the air circulation duct (21) is provided in the vehicle interior (13) with a manually displaceable shut-off flap (29a).

8. An arrangement according to claim 7 characterised in that the differential pressure can be varied by manual displacement of the shut-off flap(s) (29a) on the outlet opening(s) (28-30) in the vehicle interior.

9. An arrangement according to at least one of the preceding claims characterised in that the air guide ducts (25-27) are provided with motor-displaceable shut-off flaps (32-34).

10. An arrangement according to at least one of the preceding claims characterised in that the reference value in respect of the amount of air to be fed is predetermined in dependence on the selected distribution of air for the vehicle interior (13).

11. An arrangement according to one of claims 7 to 10 characterised in that the reference value in respect of the amount of air to be fed is determined by given combinations of position of the shut-off flaps (32-34) on the discharge side at the outlet opening or openings.

12. An arrangement according to claim 11 characterised in that the position of the shut-off flap(s) (32-34) on the discharge side is detected by the regulating unit (55) and can be processed to preset a reference value in respect of the amount of air.

13. An arrangement according to at least one of claims 1 to 9 characterised in that in operation of a heating or air conditioning installation the reference value in respect of the amount of air to be fed is selected in dependence on the required heating or cooling output.

**Revendications**

1. Dispositif (20) de réglage du débit d'air dirigé dans le volume interne (13) d'un véhicule, de préférence d'un véhicule automobile (10), comprenant un ventilateur (41) disposé dans un canal (21) d'arrivée d'air et dont le moteur de commande (42) est attaqué par un groupe de réglage (55), comprenant un dispositif (47) de mesure de pression différentielle dont l'orifice d'admission d'air est relié au canal d'arrivée d'air (21) pour la mesure de la pression d'entrée régnant derrière le ventilateur (41), et dans lequel la tension envoyée au moteur (42) du ventilateur est fonction d'une comparaison effectuée dans le groupe de réglage (55) entre la pression différentielle mesurée, qui représente une mesure du débit d'air transporté, et un débit d'air de consigne réglable prescrit, caractérisé en ce qu'au moins un clapet d'obturation (29a ; 32-34) est prévu dans une zone de sortie du canal d'arrivée d'air (21) et en ce que l'orifice de sortie d'air du dispositif (47) de mesure de pression différentielle destiné à mesurer la pression régnant dans le volume interne du véhicule (13) est relié au volume interne du véhicule (13).

2. Dispositif selon la revendication 1, caractérisé en ce que la pression d'entrée dans le canal (21) d'arrivée d'air est mesurée derrière un évaporateur (43) d'une installation de climatisation par rapport au sens de la circulation.

3. Dispositif selon la revendication 1 ou 2, caractérisé en ce qu'un détecteur de courant d'air (47) est prévu pour la mesure de la pression différentielle, ses conduits (48, 49) de raccord au canal d'arrivée d'air (21), d'une part, et au volume interne du véhicule (13), d'autre part, ayant à peu près une même longueur et à peu près une même section.

4. Dispositif selon au moins l'une des revendications 1 à 3, caractérisé en ce qu'un groupe transistorisé de puissance (52) destiné au réglage à impulsions ou linéaire de tension ou de courant est monté entre le groupe de réglage (55) et le moteur (42) du ventilateur.

5. Dispositif selon au moins l'une des revendications précédentes, caractérisé en ce qu'un moteur (42) de ventilateur qui est commuté électroniquement est prévu.

6. Dispositif selon au moins l'une des revendications précédentes, caractérisé en ce qu'un clapet d'obturation (31) réglable par moteur est prévu dans la tubulure d'entrée d'air (23) du canal d'arrivée d'air (21), son moteur de commande (36) relié au groupe de réglage (55) étant attaqué lorsque le moteur (42) du ventilateur est alimenté en une tension minimale prescrite ou inférieure à celle-ci.

7. Dispositif selon au moins l'une des revendications précédentes, caractérisé en ce qu'au moins l'un des orifices de sortie (28-30) du canal d'arrivée d'air (21) débouchant dans le volume interne du véhicule (13) est équipé d'un clapet obturateur (29a) réglable à la main.

8. Dispositif selon la revendication 7, caractérisé en ce que la pression différentielle est modifiable dans le volume interne du véhicule par réglage manuel du ou des clapet(s) d'obturation (29a) placé(s) sur l'(les) orifice(s) de sortie (28-30).

9. Dispositif selon au moins l'une des revendications précédentes, caractérisé en ce que les canaux de conduction d'air (25-27) sont munis de clapets d'obturation (32-34) réglables par moteur.

10. Dispositif selon au moins l'une des revendications précédentes, caractérisé en ce que la consigne du débit d'air devant être admis est prescrite en fonction de la distribution choisie d'air dans le volume interne (13) du véhicule.

11. Dispositif selon l'une des revendications 7 à 10, caractérisé en ce que la consigne du débit d'air devant être admis est déterminée par des combinaisons déterminées de position des clapets d'obturation (32-34), côté sortie, placés sur l'ou les orifice(s) de sortie.

**12.** Dispositif selon la revendication 11, caractérisé en ce que la position du ou des clapet(s) d'obturation, côté sortie (32-34) est détectée par le groupe de réglage (55) et elle peut être traitée pour la fixation d'une consigne de débit d'air.

**13.** Dispositif selon au moins l'une des revendications 1 à 9, caractérisé en ce que, lorsqu'une installation de chauffage ou de climatisation est en service, la consigne du débit d'air devant être admis est adoptée en fonction de la puissance de chauffage ou de refroidissement nécessaire.

Fig. 1

Fig. 2

Fig. 3

```
                    ┌─────────────────────┐
                    │       Start         │
                    └─────────────────────┘
                               │
          ┌────────────────────▼─────────┐
          │      ┌─────────────────────┐
          │      │   Analogwerte       │
          │      │    erfassen         │
          │      └─────────────────────┘
          │                 │
          │      ┌─────────────────────┐
          │      │  Berechnen der      │
          │      │  Reglerstellgröße y │
          │      │   (PI - Regler)     │
          │      └─────────────────────┘
          │                 │
          │      ┌─────────────────────┐
          │      │  Gebläsespannung    │
          │      │    berechnen        │
          │      │    U_G = f(y)       │
          │      └─────────────────────┘
          │                 │
          │      ┌─────────────────────┐
          │      │  Gleichspannung     │
          │      │    einstellen       │
          │      └─────────────────────┘
          │                 │
          │      ┌─────────────────────┐
          │      │  Sollposition       │
          │      │  Absperrklappe      │
          │      │   berechnen         │
          │      │   α_Ak = f(y)       │
          │      └─────────────────────┘
          │                 │
          │      ┌─────────────────────┐
          │      │  Absperrklappen-    │
          │      │     motor           │
          │      │  positionieren      │
          │      └─────────────────────┘
          │                 │
          └─────────────────┘
```

Fig. 4